(19) Europäisches Patentamt / European Patent Office / Office européen des brevets

(11) **EP 4 653 296 A1**

(12) **EUROPEAN PATENT APPLICATION**
published in accordance with Art. 153(4) EPC

(43) Date of publication:
**26.11.2025 Bulletin 2025/48**

(21) Application number: **23917580.5**

(22) Date of filing: **12.06.2023**

(51) International Patent Classification (IPC):
**B62D 25/20** (2006.01)   **B62D 25/04** (2006.01)

(52) Cooperative Patent Classification (CPC):
**B62D 29/007; B62D 25/02; B62D 25/04;**
**B62D 25/20; B62D 27/023;** B62D 25/025

(86) International application number:
**PCT/JP2023/021794**

(87) International publication number:
**WO 2024/154367 (25.07.2024 Gazette 2024/30)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **18.01.2023 JP 2023006186**

(71) Applicant: **NIPPON STEEL CORPORATION**
**Chiyoda-ku**
**Tokyo 100-8071 (JP)**

(72) Inventor: **ABE, Masahiko**
**Tokyo 100-8071 (JP)**

(74) Representative: **Zimmermann & Partner**
**Patentanwälte mbB**
**Postfach 330 920**
**80069 München (DE)**

(54) **SKELETON STRUCTURE FOR VEHICLE**

(57)     A vehicle body 1 includes a side sill 5 arranged along a front-rear direction X in a side portion of a vehicle, restraining portions 21 and 22 restraining end portions of the side sill 5 in the longitudinal direction, and a center pillar 4 arranged along a direction intersecting the longitudinal direction. The side sill 5 includes a middle connection portion 50 to which the center pillar 4 is connected in a middle portion in the front-rear direction X, and end portion connection portions 51 and 52 connected to the restraining portions 21 and 22. The side sill 5 includes a first portion 61 extending on both sides of the middle connection portion 50, and a second portion 62 located on a fore end portion connection portion 51 side with respect to the first portion 61. A torsional strength in the second portion 62 is lower than a torsional strength in the first portion 61.

FIG.1

EP 4 653 296 A1

## Description

## TECHNICAL FIELD

The present disclosure relates to a skeleton structure for a vehicle.

## BACKGROUND ART

A vehicle body of a passenger car, which is a kind of a vehicle, usually includes a center pillar arranged along an up-down direction of the vehicle body, and a side sill connected to a lower portion of the center pillar and arranged along a front-rear direction of the vehicle body (for example, see Patent Document 1). Additionally, when the passenger car is involved in a side collision, the center pillar and the side sill collaborate to receive the impact load, thereby absorbing the impact, and protecting an occupant in a cabin.

## LIST OF PRIOR ART DOCUMENTS

## PATENT DOCUMENT

Patent Document 1: JP2011-57146A

## SUMMARY OF INVENTION

## TECHNICAL PROBLEM

At the time of a side collision, the smaller the intrusion amount of a vehicle body member into the cabin, the higher the occupant protection performance. However, in the configuration described in Patent Document 1, a weak portion is formed in the side sill so that, at the time of a side collision, one of portions, i.e., a front portion and a rear portion of a lower portion of the vehicle body on the basis of the center pillar, is deformed more toward the inside of the vehicle body than the other portion. Therefore, the intrusion amount at the location where this weak portion is formed becomes large.

One objective of the present disclosure is to provide a skeleton structure for a vehicle capable of further reducing the maximum amount of a vehicle body side portion intruding into the vehicle at the time of a side collision.

## SOLUTION TO PROBLEM

The gist of the present disclosure is the following skeleton structure for a vehicle.

(1) A skeleton structure for a vehicle, the skeleton structure including

a first skeleton member arranged along a front-rear direction in a side portion of the vehicle,

a restraining portion restraining an end portion of the first skeleton member in a longitudinal direction, and

a second skeleton member arranged along a direction intersecting the longitudinal direction, wherein the first skeleton member includes a middle connection portion to which the second skeleton structure is connected in a middle portion in the front-rear direction, and an end portion connection portion connected to the restraining portion,

the first skeleton member includes a first portion extending on both sides of the middle connection portion, and a second portion located on the end portion connection portion side with respect to the first portion, and

a torsional strength in the second portion is lower than a torsional strength in the first portion.

(2) The skeleton structure for the vehicle according to (1) described above, wherein when a bending strength of the first portion is Fb1, a bending strength of the second portion is Fb2, a length of the second portion in the front-rear direction is La, and a distance from an end portion of the second portion on the middle connection portion side to the middle connection portion is Lb, the following formula is established:

$$Fb2 \,/\, Fb1 > La \,/\, (La + Lb).$$

(3) The skeleton structure for the vehicle according to (1) or (2) described above, wherein a tensile strength of the second portion is less than a tensile strength of the first portion.

(4) The skeleton structure for the vehicle according to any one of (1) to (3) described above, wherein a structure fraction of a hard structure of the second portion is lower than a structure fraction of a hard structure of the first portion.

(5) The skeleton structure for the vehicle according to any one of (1) to (4) described above, wherein a thickness of the second portion is smaller than a thickness of the first portion.

(6) The skeleton structure for the vehicle according to any one of (1) to (5) described above, wherein the first portion and the second portion are joined by a weld zone.

(7) The skeleton structure for the vehicle according to any one of (1) to (6) described above, wherein the second portion extends to the end portion connection portion.

(8) The skeleton structure for the vehicle according to any one of (1) to (7) described above, wherein, in the first skeleton member, a torsional strength of a portion between the second portion and the end portion connection portion is higher than the torsional strength of the second portion.

(9) The skeleton structure for the vehicle according to any one of (1) to (8) described above, wherein one second portion is arranged between the middle connection portion and the end portion connection portion.

(10) The skeleton structure for the vehicle according to any one of (1) to (9) described above, wherein a boundary portion between the first portion and the second portion intersects a rupture line at a time when the first skeleton member is torsionally deformed and ruptured.

ADVANTAGEOUS EFFECTS OF INVENTION

According to the present disclosure, the maximum amount of a vehicle body side portion intruding into the vehicle at the time of a side collision can be further reduced.

BRIEF DESCRIPTION OF DRAWINGS

[Figure 1] Figure 1 is a schematic left side view illustrating a main portion of a vehicle body to which a vehicle body structure according to one embodiment of the present disclosure is applied.
[Figure 2] Figure 2 is a diagram illustrating a cross-sectional view of a side sill taken along line II-II in Figure 1, the cross-sectional view being perpendicular to a front-rear direction.
[Figure 3] Figure 3 illustrates diagrams illustrating the bending moment and the torsional moment that are input to the side sill at the time of a side collision of a vehicle.
[Figure 4] Figure 4A is a diagram illustrating a main portion of Variation 1 of the present disclosure. Figure 4B is a diagram illustrating a main portion of Variation 2. Figure 4C is a diagram illustrating a main portion of Variation 3.

DESCRIPTION OF EMBODIMENTS

<Circumstances that led to the disclosure of the present application>

Conventionally, a vehicle side structure that appropriately protects occupants at the time of a side collision of a vehicle has been desired. In this description, a side collision of a vehicle refers to a side collision that has a connection portion between a side sill and a center pillar as a collision position. In the vehicle, the side sill and the center pillar have roles for protecting a cabin while being deformed so as not to result in damage to occupants at the time of a side collision. Generally, since a side sill is produced by press forming a single plate, the side sill has a structure with the same strength and the same thickness in the longitudinal direction of the side sill. At the time of a side collision of a vehicle, since the bending moment of the side sill is maximum at a connection position in the side sill with the center pillar, that is, in the vicinity of and directly under a front seat occupant, a vehicle body is prone to large bending deformation at the connection position. As a result, the intrusion amount of each of members of the vehicle body, such as a center pillar inner and a door inner, which intrudes inside the cabin becomes large.

As a result of intensive research, the present discloser has arrived at an idea that it is possible to suppress the amount of the entire vehicle body, including the connection position between the side sill and the center pillar, which enters the cabin, by torsionally deforming a location of the side sill separated from the connection position with the center pillar to some extent at the time of a side collision of a vehicle. Additionally, the configuration has been considered that partially decreases the torsional strength of a front portion or a rear portion of the side sill, so that torsional deformation is generated at the location where the torsional strength is decreased. As a result, the present discloser has conceived of the present disclosure that can reduce the deformation of the vehicle body at the connection position between the side sill and the center pillar, and that reduces the intrusion amount of the entire side member into the cabin at the time of a side collision.

<Description of embodiments>

Hereinafter, embodiments of the present disclosure will be described with reference to the drawings.

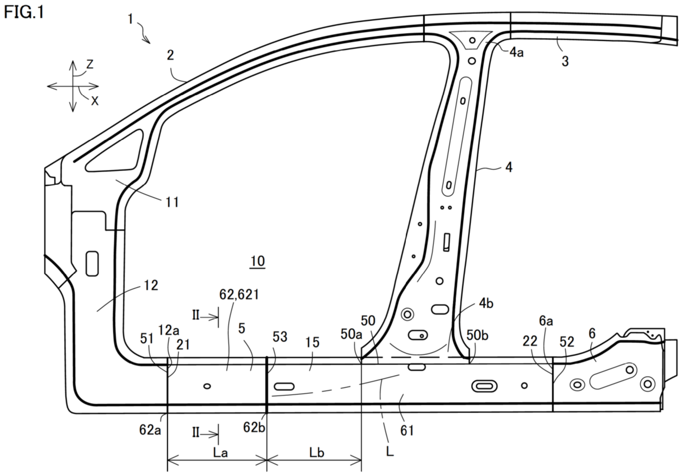

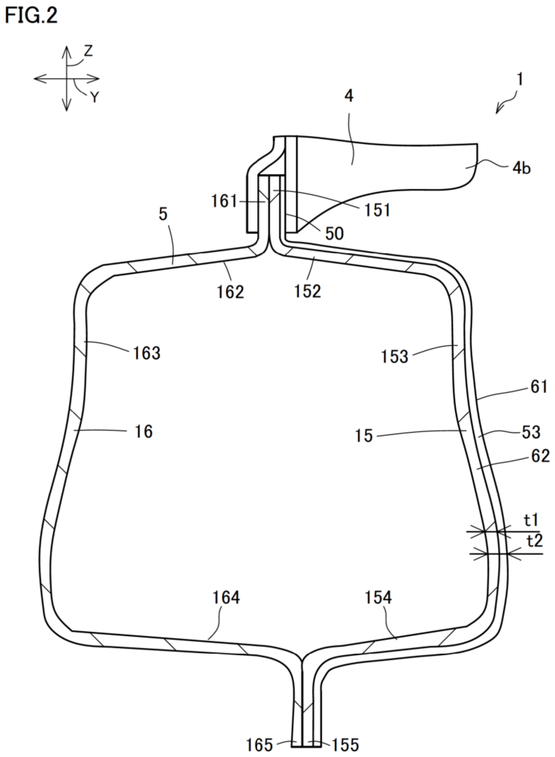

Figure 1 is a schematic left side view illustrating a main portion of a vehicle body 1 to which a vehicle body structure according to one embodiment of the present disclosure is applied. Figure 2 is a diagram illustrating a cross-sectional view of a side sill 5 taken along line **II-II** in Figure 1, the cross-sectional view being perpendicular to a front-rear direction X.
As illustrated in Figure 1 and Figure 2, the vehicle body 1 is a part of a vehicle, and an automobile can be listed as the vehicle. As an example of the automobile, a passenger car can be listed. As examples of the passenger car, a sedan type passenger car, a coupe type passenger car, a hatchback type passenger car, a minivan type passenger car, an SUV (Sport Utility Vehicle) type passenger car, and the like can be listed.
In this description, a vehicle length direction, a vehicle width direction, and a vehicle height direction are referred to as the front-rear direction X, a vehicle width direction Y, and an up-down direction Z, respectively.
In the present embodiment, the vehicle body 1 is formed by using a steel sheet that has a predetermined thickness. As the steel sheet, a plated steel sheet, such as an aluminum-plated steel sheet and a galvanized steel sheet, can be exemplified. In addition, as the steel sheet, a dual-phase steel sheet containing martensite and ferrite can be exemplified. The steel sheet may be a steel sheets other than the dual-phase steel sheet, and the specific type is not limited.

Note that the vehicle body 1 may be formed of an aluminum alloy sheet, or may include both a portion formed of an aluminum alloy sheet and a portion formed of a steel sheet. In addition, the vehicle body 1 may be entirely or partially formed of a laminated material formed of two or more of iron, aluminum, and resin.

The vehicle body 1 includes a front pillar 2, a roof pillar 3, a center pillar 4, a side sill 5, and a side sill rear 6.

As for the front pillar 2, the cross-sectional shape of a cross section perpendicular to the longitudinal direction of the front pillar 2 is formed into a closed shape (closed section shape) such as a rectangle. The front pillar 2 includes a pillar upper 11 that extends rearward as it goes upward and that is coupled to the roof pillar 3, and a pillar lower 12 arranged below the pillar upper 11. The pillar lower 12 is formed into, for example, an L shape in side view. A lower rear end edge 12a of the pillar lower 12 is opened toward the rear. This lower rear end edge 12a includes a front restraining portion 21 that restrains a fore end portion of the side sill 5 by being joined to the fore end portion of the side sill 5 by welding or adhesion. The side sill 5 extends rearward from the front restraining portion 21 of the front pillar 2.

The side sill rear 6 is arranged behind the side sill 5. The side sill rear 6 is a hollow-shell member arranged along the front-rear direction X. As for side sill rear 6, the cross-sectional shape of a cross section perpendicular to the longitudinal direction of the side sill rear 6 is formed into a closed shape (closed section shape) such as a rectangle. A front end edge 6a of the side sill rear 6 is opened toward the front. This front end edge 6a includes a rear restraining portion 22 that restrains a rear end portion of the side sill 5 by being joined to the rear end portion of the side sill 5 by welding or adhesion. The side sill 5 extends forward from the rear restraining portion 22 of the side sill rear 6.

In the present embodiment, as described above, the front restraining portion 21 and the rear restraining portion 22 restrain the both end portions of the side sill 5 in the longitudinal direction.

The roof pillar 3 is arranged at a roof portion of the vehicle body 1, and extends rearward from the pillar upper 11. The roof pillar 3 includes a roof pillar outer arranged on the outer side of the vehicle width direction Y, and a roof pillar inner arranged on the inner side of the vehicle width direction Y with respect to the roof pillar outer, and has a closed section shape as a cross sectional shape perpendicular to the longitudinal direction of the roof pillar 3.

The center pillar 4 is an example of a second skeleton member arranged along a direction intersecting the longitudinal direction of the side sill 5. The center pillar 4 is arranged behind the front pillar 2, and is arranged along the up-down direction Z from the roof pillar 3 to the side sill 5.

The center pillar 4 includes a pillar outer arranged on the outer side of the vehicle width direction Y, and a pillar inner arranged on the inner side the vehicle width direction Y with respect to the pillar outer, and has a closed section shape as a cross section shape perpendicular to the up-down direction Z.

An upper portion 4a of the center pillar 4 is fixed to a middle portion of the roof pillar 3 in the front-rear direction X by welding, with an adhesive, or the like. A lower portion 4b of the center pillar 4 is joined to a middle portion of the side sill 5 in the front-rear direction X by welding, with an adhesive, or the like.

The side sill 5 is a first skeleton member arranged along the front-rear direction X on the side of the vehicle, and is provided in a lower portion of an outer portion of the vehicle body 1 in the vehicle width direction Y in the present embodiment. The side sill 5 is connected to the lower portion 4b of the center pillar 4, and is arranged along the front-rear direction X of the vehicle body 1. In a cross section perpendicular to the front-rear direction X, the side sill 5 constitutes an endless closed section shape.

The side sill 5 includes a side sill outer 15 and a side sill inner 16 that are disposed in the vehicle width direction Y.

The cross-sectional shapes of the side sill outer 15 and the side sill inner 16 perpendicular to the front-rear direction X are formed into hat shapes, respectively, and cooperate to form the closed section shape in the side sill 5. The side sill outer 15 is arranged on the outer side of the vehicle width direction Y with respect to the side sill inner 16.

The side sill outer 15 includes an upper flange 151, an upper wall 152 extending outward in the vehicle width direction Y from the upper flange 151, a side wall 153 extending downward from the upper wall 152, a lower wall 154 extending inward in the vehicle width direction Y from the side wall 153, and a lower flange 155 extending downward from the lower wall 154.

The side sill inner 16 includes an upper flange 161, an upper wall 162 extending inward in the vehicle width direction Y from the upper flange 161, a side wall 163 extending downward from the upper wall 162, a lower wall 164 extending outward in the vehicle width direction Y from the side wall 163, and a lower flange 165 extending downward from the lower wall 164.

The upper flanges 151 and 161 are joined to each other by welding, adhesion, or the like. Similarly, the lower flanges 155 and 165 are joined to each other by welding, adhesion, or the like.

The side sill 5 includes a middle connection portion 50 to which the center pillar 4 is connected at the middle portion in the front-rear direction X, and end portion connection portions 51 and 52 connected to the restraining portions 21 and 22.

The middle connection portion 50 is a location of the side sill 5 to which the lower portion 4b of the center pillar 4 is joined by welding or with an adhesive. The middle connection portion 50 is formed in, for example, the upper flanges 151 and 161 of the side sill 5, and is in contact with the lower portion 4b of the center pillar 4. The middle connection portion 50 has a predetermined length in the front-rear direction X. A fore end 50a of the middle connection portion 50 contacts a fore end of the lower portion 4b of the center pillar 4. A rear end 50b of the middle connection portion 50 contacts a rear end of the lower portion 4b of the center pillar 4. Note that the middle connection portion 50 may be provided not only in the upper flanges 151 and 161 of the side sill 5, but in locations other than the upper flanges 151 and 161 of the side sill 5, such as the upper walls 152 and 162, or the side walls 153 and 163.

A fore end portion connection portion 51 is a portion that is joined to the front restraining portion 21 of the pillar lower 12 and is fixed to the front restraining portion 21. A rear end portion connection portion 52 is a portion that is joined to the rear restraining portion 22 of the side sill rear 6, and is fixed to the rear restraining portion 22.

The side sill 5 includes a first portion 61 and a second portion 62 (621). The first portion 61 includes the middle connection portion 50, and extends on both the front and rear sides of the middle connection portion 50. The second portion 62 (621) is located at one side of the end portion connection portions 51 and 52 with respect to the first portion 61, and has a torsional strength lower than the torsional strength in the first portion 61. Here, the torsional strength refers to the strength at the time when the side sill 5 is twisted around an axis along the front-rear direction X.

The first portion 61 and the second portion 62 are formed by the side sill outer 15 and the side sill inner 16, and are disposed in the front-rear direction X. In the present embodiment, the second portion 62 constitutes a front portion of the side sill 5, including the fore end portion connection portion 51. In addition, the first portion 61 constitutes a portion other than second portion 62, and includes a part of a portion in front of the middle connection portion 50, the middle connection portion 50, and a portion behind the middle connection portion 50. The first portion 61 includes the rear end portion connection portion 52.

When an object collides with the side sill 5 from the side, particularly, when a side collision occurs in the center pillar 4 and the side sill 5 in the vicinity of the middle connection portion 50, the side sill 5 receives the impact load from the object with the front restraining portion 21 of the front pillar 2, the middle connection portion 50, and the rear restraining portion 22 as restraining positions. Additionally, when the impact load is at a certain level or more, the side sill 5 absorbs the impact load while being plastically deformed toward the inner side in the vehicle width direction Y.

Additionally, at the time of a side collision of the vehicle, there is a tendency that the intrusion amount of the side sill 5 and the center pillar 4 toward the inner side of the vehicle due to the bending deformation and torsional deformation in the middle connection portion 50 becomes the largest in the intrusion amount of the vehicle body side portion. On the other hand, in the present embodiment, the second portion 62, which has the torsional strength lower than the torsional strength in the first portion 61, is provided separately from the middle connection portion 50. Accordingly, at the time of a side collision of the vehicle, the impact load can be released in the second portion 62 by allowing the second portion 62 to be torsionally deformed. As a result, it is possible to suppress the torsional deformation that deforms the middle connection portion 50 toward the inner side of the vehicle. Therefore, it is possible to reduce the intrusion amount into the cabin 10 in the vicinity of the middle connection portion 50 in which the intrusion amount into the cabin 10 tends to become the largest at the time of a side collision of the vehicle. As a result of being able to reduce the intrusion amount into the cabin 10 in this location where the intrusion amount becomes the largest, the maximum value of the intrusion amount of the vehicle body 1 into the cabin at the time of a side collision of the vehicle can be further reduced.

The second portion 62 is provided in front of the middle connection portion 50 in the present embodiment. The second portion 62 may be arranged separately from the middle connection portion 50, and the specific position is not limited. Note that the longer a distance Lb from the middle connection portion 50 to the second portion 62, the more the amount of torsional deformation of the side sill 5 and the center pillar 4 in the vicinity of the middle connection portion 50, which is linked to the torsional deformation of the second portion 62, can be suppressed.

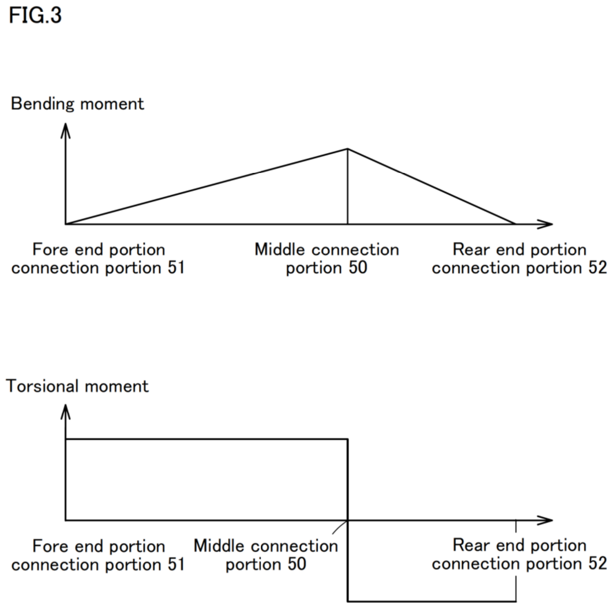

Figure 3 illustrates diagrams illustrating the bending moment and the torsional moment that are input to the side sill 5 at the time of a side collision of the vehicle. In Figure 3, the illustration of distribution of the bending moment and the illustration of distribution of the torsional moment in the middle connection portion 50 are omitted. In the middle connection portion 50, the bending moment and the torsional moment in respective portions are substantially constant, respectively. As illustrated in Figure 3, at the time of a side collision of the vehicle, the bending moment that is input to the side sill 5 becomes greatest at the middle connection portion 50, and becomes smaller toward the fore end portion connection portion 51 and the rear end portion connection portion 52. In some cases, although the positive and negative bending moments are reversed in the vicinity of the fore end connection portion 51 and rear end portion connection portion 52, the absolute value of the bending moment is small. This is similar to the bending moment distribution in a case where a point load is applied to a beam that is supported / fixed at both ends.

On the other hand, as illustrated in Figure 3, the torsional moment that is input to the side sill 5 is small in the middle connection portion 50 (the connection portion with the center pillar 4), and is constant in the other cross sections. This is similar to the torsional moment distribution in a case where a twist is applied to one location of the beam whose both ends are fixed.

Considering the distribution of the bending moment and torsion moment described above, it is preferable that the second portion 62 is provided such that, at the time of a side collision of the vehicle, the side sill 5 and the center pillar 4 in the vicinity of the middle connection portion 50 are deformed mainly due to the bending moment, and the second portion 62 is torsionally deformed mainly due to the torsional moment.

For example, it is preferable not to make the range of the second portion 62 excessively wide in that excessive deformation of the second portion 62 due to the bending moment can be suppressed. On the other hand, it is preferable not to make the range of the second portion 62 excessively narrow in that shear buckling of the upper walls 152 and 162 of the side sill 5 in the second portion 62 can be facilitated, and the deformation of the side sill 5 due to the torsional moment can be facilitated.

Note that the strength of the first portion 61 and the second portion 62 can be set with reference to the fully plastic bending moment and the fully plastic torsional moment, and may also be set using concepts such as effective width, taking into account elastic buckling.

It is preferable that the following configuration is applied based on the finding of the relationship between the bending moment and the torsional moment described above. That is, when the bending strength of the first portion 61 is Fb1, the bending strength of the second portion 62 is Fb2, the length of the second portion 62 in the front-rear direction X is La, and the distance from an end portion 62b of the second portion 62 near the middle connection portion 50 to the middle connection portion 50 is Lb, it is preferable that the following formula (1) is established.

$$Fb2 / Fb1 > La / (La + Lb) ... (1)$$

Note that the bending strength is the fully plastic bending moment (fully plastic moment).

The denominator (La + Lb) of the right term of the formula (1) indicates the distance from the middle connection portion 50 to an end portion 62a of the second portion 62 on the fore end connection portion 51 side. In addition, the left term of the formula (1) indicates the ratio of the bending strength Fb2 of the second portion 62 to the bending strength Fb1 of the first portion 61. As can be seen from this formula (1), compared with the ratio of the length La of the second portion 62 to the distance La + Lb from the middle connection portion 50 to the end portion 62a, the ratio of the bending strength Fb2 of the second portion 62 to the bending strength Fb1 of the first portion 61 is set higher. In this manner, by securing moderately high bending strength also in the second portion 62, the intrusion amount of the second portion 62 due to the bending deformation (bending moment) into the cabin 10 is reduced, while allowing the second portion 62 to be torsionally deformed at the time of a side collision of a vehicle.

As described above, since the formula (1) is satisfied, the amount of torsional deformation can be moderately increased while suppressing the amount of bending deformation in the second portion 62 at the time of a side collision of the vehicle, and thus the impact load that acts on the middle connection portion 50 due to the torsion deformation of the second portion 62 can be released. As a result, the intrusion amount of the side sill 5 and the center pillar 4 in the vicinity of the middle connection portion 50 intruding into the cabin 10 can be reduced. In addition, also in the second portion 62, in the case of the torsional deformation, as a result of being able to absorb the impact load by shear deformation of the upper walls 152 and 162 of the side sill 5, the amount of bending deformation of the second portion 62 into the cabin 10 due to the impact load can be reduced. Therefore, in the side portion of the vehicle body 1, in any of the side sill 5 and the center pillar 4 in the vicinity of the middle connection portion 50 as well as the second portion 62, the maximum value of the intrusion amount into the cabin 10 due to the impact load can be further reduced. Since, for example, the feet of an occupant are located in the second portion 62, the effect of protecting the feet of the occupant can be increased by not causing a large intrusion amount due to bending.

Note that, when the bending strength Fb2 of the second portion 62 is not less than the bending strength Fb1 of the first portion 61 $((Fb2 / Fb1) \geq 1)$, the torsional deformation is less likely to occur in the second portion 62. Therefore, it is preferable that Fb1 > Fb2, that is, $1 > (Fb2 / Fb1)$. Therefore, the formula (1) can be expressed as the following formula (2).

$$1 > Fb2 / Fb1 > La / (La + Lb) ... (2)$$

When a boundary portion (weld zone 53, which will be described later) between the first portion 61 and the second portion 62 is not straight in a height direction Z that is perpendicular to the front-rear direction X, it is preferable that the formulas (1) and (2) are established in at least a part of the height direction Z, and it is more preferable that the formulas (1) and (2) are established in the entire area of the height direction Z.

In the present embodiment, the second portion 62 extends to the fore end portion connection portion 51. Accordingly, the length of the second portion 62 can be sufficiently secured at a position farther from the middle connection portion 50. Therefore, at the time of a side collision of the vehicle, the second portion 62 can be sufficiently torsionally deformed to release the impact load from the middle connection portion 50, and it is possible to suppress the intrusion amount of the side sill 5 and the center pillar 4 in the vicinity of the middle connection portion 50 intruding into the cabin 10. Note that the second portion 62 may not include the fore end portion connection portion 51. In this case, the fore end portion connection portion 51 is formed by, for example, the first portion 61, and this first portion 61 and the second portion 62 are joined together. That is, the first portion 61, the second portion 62, and the first portion 61 are arranged in this order from the front side to the rear side, and the first portion 61 on the front side may have the front restraining portion 21.

In the present embodiment, one second portion 62 is arranged between the middle connection portion 50 and the fore end portion connection portion 51. Accordingly, the configuration of the side sill 5 including the first portion 61 and the second portion 62 can be made simple, and it is easy to design the degree of facilitating the torsional deformation of the second portion 62 at the time of a side collision of the vehicle to a desired value.

In the present embodiment, the entire side sill inner 16, including the first portion 61 and the second portion 62, is formed of the same steel sheet, and has a single thickness, tensile strength, torsion deformation, and bending strength. That is, the configuration of the side sill inner 16 in the first portion 61 and the configuration of the side sill inner 16 in the second portion 62 are the same. The side sill inner 16 has a tensile strength of, for example, 980 MPa or more, and a thickness of, for example, 0.8 mm to 2.0 mm. Note that the configuration of the side sill inner 16 in the first portion 61 may be different from the configuration of the side sill inner 16 in the second portion 62.

In the present embodiment, the configuration of the side sill outer 15 in the first portion 61 is different from the configuration of the side sill outer 15 in the second portion 62, so that the intrusion amount of the side sill 5 and the center pillar 4 intruding into the cabin 10 at the time of a side collision of the vehicle is reduced. Note that, unless otherwise described, when describing that the configuration of the first portion 61 is different from the configuration of the second portion 62, the configuration of the side sill outer 15 will be described.

In the present embodiment, the torsional strength in the second portion 62 is made lower than the torsional strength in the first portion 61, by forming the side sill outer 15 using a tailored blank (Tailor Welded Blank: TWB). In the present embodiment, the second portion 62 is arranged at a fore end of the side sill 5, and the end portion 62b of the second portion 62 and the first portion 61 are joined by the weld zone 53 serving as the boundary portion. The weld zone 53 is a portion formed by laser welding or the like.

The weld zone 53 may extend to intersect a rupture line L at the time when the first portion 61 and the second portion 62 are torsionally deformed and ruptured. In Figure 1, the rupture line L is indicated by a two-dot chain line, which is an imaginary line. In the present embodiment, the weld zone 53 is formed straight along the height direction Z. By arranging the weld zone 53 in this manner, when the first portion 61 and the second portion 62 are torsionally deformed (plastically deformed), the side sill 5 is not deformed along the weld zone 53, and large rupture does not occur along the weld zone 53. In particular, when the side sill 5 is formed of an ultra-high tensile material that is easily ruptured due to its extremely high tensile strength, the rupture of the side sill 5 can be more positively suppressed.

The tensile strength of the second portion 62 may be lower than the tensile strength of the first portion 61. Also in this case, since the torsional deformation in the second portion 62 can be facilitated at the time of a side collision of the vehicle, the impact load can be moderately released in the second portion 62. As a result, it is possible to further reduce the intrusion amount of the side sill 5 and the center pillar 4 in the vicinity of the middle connection portion 50 intruding into the cabin 10 due to the impact load.

For example, a configuration can be exemplified in which the tensile strength of the second portion 62 is 1.0 GPa, and the tensile strength of the first portion 61 is 1.5 GPa or 2.0 GPa.

The tensile strength of the second portion 62 is preferably 590 MPa to 1.5 GPa, and more preferably 780 MPa to 1.5 GPa. By setting the tensile strength of the second portion 62 to the aforementioned lower limit value or more, the bending strength of the second portion 62 can be sufficiently secured, and excessive bending deformation in the second portion 62 can be suppressed at the time of a side collision of the vehicle. In addition, by setting the tensile strength of the second portion 62 to the aforementioned upper limit value or less, it is possible to allow the second portion 62 to be moderately torsionally deformed at the time of a side collision of the vehicle, so as to release the impact load. As a result, it is possible to further reduce the intrusion amount of the side sill 5 and the center pillar 4 in the vicinity of the middle connection portion 50 intruding into the cabin 10.

In addition, the tensile strength of the first portion 61 is preferably 980 MPa to 2.0 GPa, and more preferably 1180 MPa to 2.0 GPa. By setting the tensile strength of the first portion 61 to the aforementioned lower limit value or more, the bending strength and torsional strength of the first portion 61 can be sufficiently secured. As a result, it is possible to further reduce the intrusion amount of the side sill 5 and the center pillar 4 in the vicinity of the middle connection portion 50 intruding into the cabin 10 at the time of a side collision of the vehicle. In addition, by setting the tensile strength of the first portion 61 to the aforementioned upper limit value or less, it is possible to make it difficult for the side sill 5 to be ruptured in the vicinity of the middle connection portion 50 at the time of a side collision of the vehicle.

The structure fraction of a hard structure in the structure of the second portion 62 may be lower than the structure fraction of a hard structure in the structure of the first portion 61. In this case, since the torsional deformation in the second portion 62 can be facilitated at the time of a side collision of the vehicle, the impact load can be moderately released in the second portion 62. As a result, it is possible to further reduce the intrusion amount of the side sill 5 and the center pillar 4 in the vicinity of the middle connection portion 50 intruding into the cabin 10 due to the impact load. As the hard structure, martensite, perlite, retained austenite, and bainite can be exemplified, and particularly, martensite can be exemplified.

The thickness of the second portion 62 may be smaller than the thickness of the first portion 61. In this case, since the torsional deformation in the second portion 62 can be facilitated at the time of a side collision of the vehicle, the impact load can be moderately released in the second portion 62. As a result, it is possible to further reduce the intrusion amount of the side sill 5 and the center pillar 4 in the vicinity of the middle connection portion 50 intruding into the cabin 10 due to the impact load.

For example, a configuration can be exemplified in which a thickness t2 of the second portion 62 is 1.6 mm, and a thickness t1 of the first portion 61 is, for example, 1.1 mm.

The thickness t2 of the second portion 62 is preferably 0.8 mm to 2.0 mm, and more preferably 1.0 mm to 2.0 mm. By setting the thickness t2 of the second portion 62 to the aforementioned lower limit value or more, the bending strength and torsional strength of the second portion 62 can be sufficiently secured, and excessive bending deformation in the second portion 62 can be suppressed at the time of a side collision of the vehicle. In addition, by setting the thickness t2 of the second portion 62 to the aforementioned upper limit value or less, it is possible to allow the second portion 62 to be moderately torsionally deformed at the time of a side collision of the vehicle, so as to release the impact load. As a result, it is possible to further reduce the intrusion amount of the side sill 5 and the center pillar 4 in the vicinity of the middle connection portion 50 intruding into the cabin 10.

In addition, the thickness t1 of the first portion 61 is preferably 0.8 mm to 2.0 mm, and more preferably 1.2 mm to 2.0 mm. By setting the thickness t1 of the first portion 61 to the aforementioned lower limit value or more, the bending strength and torsional strength of the first portion 61 can be sufficiently secured. As a result, it is possible to further reduce the intrusion amount of the side sill 5 and the center pillar 4 in the vicinity of the middle connection portion 50 intruding into the cabin 10 at the time of a side collision of the vehicle. In addition, by setting the thickness t1 of the first portion 61 to the aforementioned upper limit value or less, it is possible to prevent the weight of the vehicle from being increased.

The embodiment of the present disclosure has been described above. However, the present disclosure is not limited to the embodiment described above. Various modifications can be made to the present disclosure within the scope described in the claims. Note that, hereinafter, configurations different from the embodiments and variations described above will be mainly described, the same or the like numerals are assigned to the same or the like configurations, and a detailed description is omitted.

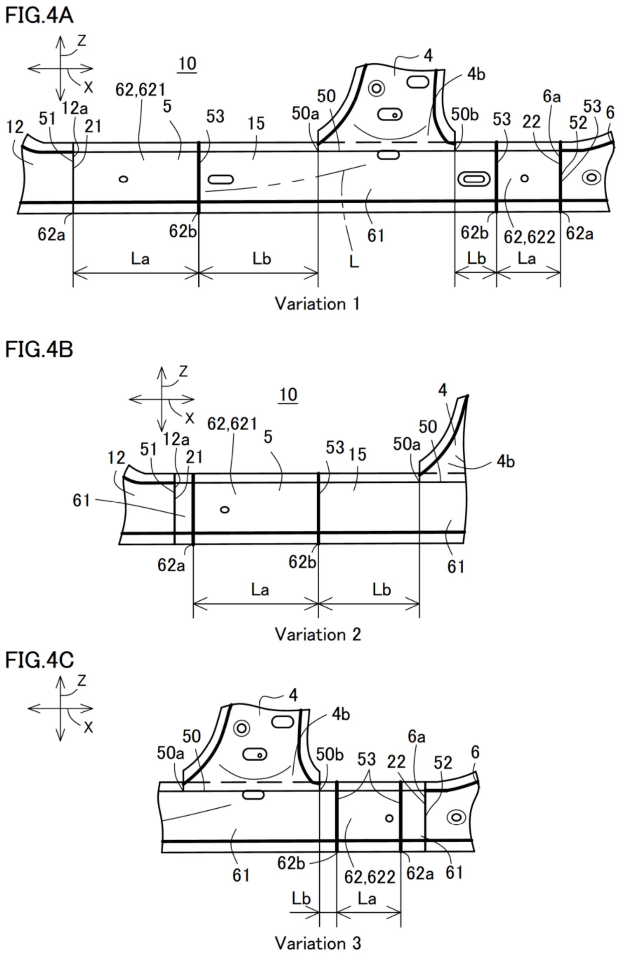

(1) Figure 4A is a diagram illustrating a main portion of Variation 1 of the present disclosure. This Variation 1 is different from the embodiment in that the second portion 62 (622) is also provided behind the middle connection portion 50 in the side sill 5. The second portion 62 on the rear side may be arranged separately from the middle connection portion 50, and the specific position is not limited.

In this case, when the length of the second portion 62 on the rear side is La, and the distance from the end portion 62b near the middle connection portion 50 to the middle connection portion 50 is Lb, it is preferable that the following formula (1) is established.

$$Fb2 / Fb1 > La / (La + Lb) \ldots (1)$$

The second portion 62 on the rear side may extend to the rear end portion connection portion 52. Accordingly, the length of the second portion 62 on the rear side can be sufficiently secured at a position farther from the middle connection portion 50. In addition, since the second portion 62 is provided in each of the front and rear of the middle connection portion 50, both the two second portions 621 and 622 can be sufficiently torsionally deformed at the time of a side collision of the vehicle, so as to release the impact load from the middle connection portion 50. Therefore, it is possible to further suppress the intrusion amount of the side sill 5 and the center pillar 4 in the vicinity of the middle connection portion 50 intruding into the cabin 10. Note that the second portion 62 on the rear side may not include the rear end portion connection portion 52. In this case, the rear end portion connection portion 52 is formed by, for example, the first portion 61, and this first portion 61 and the second portion 62 on the rear side are joined together. That is, behind the middle connection portion 50, the first portion 61, the second portion 62, and the first portion 61 are arranged in this order from the front side to the rear side, and the first portion 61 on the rear side may have the rear restraining portion 22.

In Variation 1, one second portion 62 on the rear side is arranged between the middle connection portion 50 and the rear end portion connection portion 52. Accordingly, the configuration of the side sill 5 can be made simple on the rear side of the middle connection portion 50, and it is easy to design the degree of facilitating the torsional deformation of the second portion 62 on the rear side at the time of a side collision of the vehicle to a desired value.

In this variation, the distance from the middle connection portion 50 to the rear end portion connection portion 52 is shorter, compared to the distance from the middle connection portion 50 to the fore end portion connection portion 51. Therefore, the length La of the second portion 621 on the front side is relatively long, and the length La of the second portion 622 on the rear side is relatively short. The lengths of the second portions 621 and 622 are set according to the lengths from the middle connection portion 50 to the end portion connection portions 51 and 52.

Note that, in this Variation 1, by forming the entire front side portion of the middle connection portion 50 in the side sill 5 by the first portion 61, the second portion 62 may be eliminated from the front side portion. That is, of the two second portions 621 and 622 located at the front and rear, the second portion 621 on the front side may be replaced with the first portion 61.

(2) Figure 4B is a diagram illustrating a main portion of Variation 2. In this Variation 2, the torsional strength of a portion (for example, the first portion 61) between the second portion 62 on the front side and the fore end portion connection portion 51 is set higher than the torsional strength of the second portion 62. With this configuration, the position of the second portion 62 in the front-rear direction X can be set with a high degree of freedom. Therefore, the position at which the torsional deformation in the second portion 62 occurs at the time of a side collision of the vehicle can be set with a high degree of freedom in the front-rear direction X. The portion between the second portion 62 on the front side and the fore end portion connection portion 51 may be the first portion 61, or may be a portion that has a different torsional strength from the first portion 61.

(3) Figure 4C is a diagram illustrating a main portion of Variation 3. In this variation 3, the torsional strength of a portion (for example, the first portion 61) between the second portion 62 on the rear side and the rear end portion connection portion 52 is set higher than the torsional strength of the second portion 62 on the rear side. With this configuration, the position of the second portion 62 on the rear side in the front-rear direction X can be set with a high degree of freedom. Therefore, the position at which the torsional deformation in the second portion 62 on the rear side occurs at the time of a side collision of the vehicle can be set with a high degree of freedom in the front-rear direction X. The portion between the second portion 62 on the rear side and the rear end portion connection portion 52 may be the first portion 61, or may be a portion that has a different torsional strength from the first portion 61.

(4) In the embodiment described above, although a mode has been described as an example in which the first portion 61 and the second portion 62 of the side sill outer 15 are constituted by the tailored blank obtained by joining the two steel sheets with different thicknesses and tensile strengths by welding, the first portion 61 and the second portion 62 of the side sill outer 15 may not be constituted in this manner. The thickness of the first portion 61 and the thickness of the second portion 62 may be the same, and the tensile strength of the second portion 62 may be set lower than the tensile strength of the first portion 61. When the thickness of the first portion 61 and the thickness of the second portion 62 are the same, it is possible to make a die for press forming the side sill (the side sill outer 15) from the blank into a simpler shape. Furthermore, it is possible to suppress the stress concentration in the weld zone 53 in a case where there is a thickness change in the side sill outer 15 formed by the tailored blank. Therefore, it is possible to suppress rupture of a high-strength steel sheet, which is prone to be ruptured due to plastic deformation, at the time of a side collision of the vehicle. In addition, the tensile strength of the first portion 61 and the tensile strength of the second portion 62 may be the same, and the thickness of the second portion 62 may be less than the thickness of the first portion 61.

In addition, the first portion 61 and the second portion 62 of the side sill outer 15 may be constituted by one blank of a single steel type, instead of the tailored blank. In this case, a configuration can be exemplified in which, when forming the side sill from the blank by hot stamping (hot pressing), the cooling rate of a location that will become the second portion 62 is set lower than the cooling rate of a location that will become the first portion 61, and the tensile strength of the second portion 62 is set lower than the tensile strength of the first portion 61. In addition, a configuration can be exemplified in which the tensile strength of the second portion 62 is set lower than the tensile strength of the first portion 61, by partially heat-treating a cold rolled steel sheet blank. In this case, it is preferable that the border between the first portion 61 and the second portion 62 exists so as to intersect the rupture line L, similar to the weld zone 53.

(5) In the embodiment, although the configuration has been described as an example in which the fore end portion connection portion 51 facing forward in the fore end of the side sill 5 is joined to the front restraining portion 21 of the front pillar 2, the fore end portion connection portion 51 may not be joined in this manner. The fore end portion connection portion 51 may be provided on an upper surface of the fore end of the side sill 5, and may be joined to a lower end portion of the front pillar 2, or may be joined to a front restraining portion provided to a structural member other than the side sill 5. The front restraining portion 21 may be a restraining point on the front side when the side sill 5 receives the impact load and is plastically deformed at the time of a side collision, and the specific member is not limited.

(6) In the embodiment, although the configuration has been described as an example in which the rear end portion connection portion 52 of the side sill 5 is joined to the rear restraining portion 22 of the side sill rear 6, the rear end portion connection portion 52 may not be joined in this manner. The rear end portion connection portion 52 may be joined to a rear restraining portion provided to a structural member other than the side sill rear. As such a structural member, a wheelhouse inner, a rear floor panel, a rear cross member, and a C pillar can be exemplified. The rear restraining portion 22 may be a restraining point on the rear side when the side sill 5 receives the impact load and is plastically deformed at the time of a side collision, and the specific member is not limited.

(7) Two or more second portions 62 may be provided separately in the front-rear direction X in each of the front and rear of the middle connection portion 50.

(8) In addition, in the embodiment, although the configuration has been described as an example in which the first skeleton member is the side sill 5, the first skeleton member may not be the side sill 5. The first skeleton member may be the roof pillar 3 or the like. Also when the first skeleton member is the roof pillar 3, the second skeleton member is the center pillar 4.

EXAMPLES

Models of the vehicle body 1 of Example 1, Example 2, and Comparative Example were created by a computer. Note that, in these models, a front seat door and a rear seat door were attached to the vehicle body 1.

<Schematic configurations of Example 1, Example 2, and Comparative Example>

Example 1: the configuration of the embodiment illustrated in Figure 1, in which one second portion 62 is provided in front of the middle connection portion 50, and the second portion 62 is not provided behind the middle connection portion 50.

Example 2: the configuration of Variation 1 illustrated in Figure 4A, in which one second portion 62 is provided in front of the middle connection portion 50, and one second portion 62 is provided behind the middle connection portion 50.

Comparative Example: a configuration in which the first portion 61 is provided instead of the second portion 62 in the configuration of the embodiment. That is, the configuration in which the entire side sill outer 15 is the first portion 61.

<Configurations common to Example 1, Example 2, and Comparative Example>

The tensile strength and thickness of the pillar lower 12 of the front pillar 2: 2.0 GPa, t = 1.0 mm

The tensile strength and thickness of the side sill inner 16: 2.0 Gpa, t = 1.1 (mm)

<Configuration of Example 1>

The second portion 62 is arranged on the fore end side so as to include the fore end portion connection portion 51 of the side sill 5.

The length La of the second portion 62: 328 mm
The distance Lb from the middle connection portion 50 to the second portion 62: 422 mm
The tensile strength and thickness of the side sill outer 15 in the first portion 61: 2.0 GPa, t = 1.6 mm
The tensile strength and thickness of the side sill outer 15 in the second portion 62 on the front side: 1.0 GPa, t = 1.6 mm
The bending strength Fb1 of the first portion 61: 23.2 kN·m
The bending strength Fb2 of the second portion 62: 14.0 kN·m

Note that the bending strengths FB1 and Fb2 are fully plastic bending moments.

<Configuration of Example 2>

The configuration of the second portion 62 on the front side is the same as that in Example 1.

The second portion 62 on the rear side is arranged on a rear end side so as to include the rear end portion connection portion 52 of the side sill 5.

The length La of the second portion 62 on the rear side: 155 mm
The distance Lb from the middle connection portion 50 to the second portion 62 on the rear side: 274 mm
The tensile strength and thickness of the side sill outer 15 in the first portion 61: 2.0 GPa, t = 1.6 mm
The tensile strength and thickness of the side sill outer 15 in the second portion 622 on the rear side: 1.0 GPa, t = 1.6 mm
The bending strength Fb1 of the first portion 61: 23.2 kN·m
The bending strength Fb2 of the second portion 622 on the rear side: 14.0 kN·m

<Conditions of Side Collision Test>

It was conducted in accordance with the SUV side collision test revised in 2022 by the Insurance Institute for Highway Safety (IIHS). This side collision test was conducted on the models of the vehicle body 1 on a computer. The conditions of this side collision test were conditions that an approximately 1900 kg carriage is caused to collide with the vehicle body 1 from a side at 60 km/h.

<Evaluation of a Side Collision Test>

The intrusion amount of the vehicle body 1 intruding into the cabin 10 due to a side collision was measured at a plurality of locations. The measurement locations were 22 locations in total, i.e., one location corresponding to the head of an occupant who sat on a front seat of the vehicle body 1, seven locations in the front-rear direction X at the height of the chest of the occupant, seven locations in the front-rear direction X at the height of the waist of the occupant, and seven locations in the front-rear direction X at the height of the feet of the occupant. The average value of the intrusion amounts at the 22 locations in Example 1 was calculated. Similarly, the average value of the intrusion amounts at the 22 locations in each of Example 2 and Comparative Example was calculated.

When the average value of the intrusion amounts in Comparative Example was set to 1, the average value of the intrusion amounts in Example 1 and the average value of the intrusion amounts in Example 2 were as follows.

The average value of the intrusion amounts in Comparative Example: 1.00
The average value of the intrusion amounts in Example 1: 0.49
The average value of the intrusion amounts in Example 2: 0.46

As is clear from Examples 1 and 2, it was proved that, by providing the second portion 62 having a torsional strength lower than the torsional strength of the first portion 61, the intrusion amount of the vehicle body 1 could be reduced over a wide range of a vehicle side surface. In particular, it was proved that, by providing the second portion 62, having a long distance from the middle connection portion 50 to the fore end portion connection portion 51, on the front side of the side sill 5, the deformation of the vehicle body 1 could be dispersed, and the intrusion amount could be reduced over a wide range of the vehicle side surface.

INDUSTRIAL APPLICABILITY

The present disclosure can be widely applied as skeleton structures of vehicles.

REFERENCE SIGNS LIST

4 center pillar (second skeleton member)
5 side sill (first skeleton member)
21 front restraining portion (restraining portion)
22 rear restraining portion (restraining portion)
50 middle connection portion
51 fore end portion connection portion (end portion connection portion)
52 rear end portion connection portion (end portion connection portion)
53 weld zone (boundary portion)
61 first portion
62 second portion
t1 thickness of first portion
t2 thickness of second portion
X front-rear direction

**Claims**

1. A skeleton structure of for a vehicle, the skeleton structure comprising:

   a first skeleton member arranged along a front-rear direction in a side portion of the vehicle;
   a restraining portion restraining an end portion of the first skeleton member in a longitudinal direction; and
   a second skeleton member arranged along a direction intersecting the longitudinal direction, wherein the first skeleton member includes a middle connection portion to which the second skeleton structure is connected in a middle portion in the front-rear direction, and an end portion connection portion connected to the restraining portion,
   the first skeleton member includes a first portion extending on both sides of the middle connection portion, and a second portion located on the end portion connection portion side with respect to the first portion, and
   a torsional strength in the second portion is lower than a torsional strength in the first portion.

2. The skeleton structure for the vehicle according to claim 1, wherein when a bending strength of the first portion is Fb1, a bending strength of the second portion is Fb2, a length of the second portion in the front-rear direction is La, and a distance from an end portion of the second portion on the middle connection portion side to the middle connection portion is Lb, the following formula is established:

$$Fb2 \,/\, Fb1 > La \,/\, (La + Lb).$$

3. The skeleton structure for the vehicle according to claim 1 or claim 2, wherein a tensile strength of the second portion is less than a tensile strength of the first portion.

4. The skeleton structure for the vehicle according to claim 1 or claim 2, wherein a structure fraction of a hard structure of the second portion is lower than a structure fraction of a hard structure of the first portion.

5. The skeleton structure for the vehicle according to claim 1 or claim 2, wherein a thickness of the second portion is smaller than a thickness of the first portion.

6. The skeleton structure for the vehicle according to claim 1 or claim 2, wherein the first portion and the second portion are joined by a weld zone.

7. The skeleton structure for the vehicle according to claim 1 or claim 2, wherein the second portion extends to the end portion connection portion.

8. The skeleton structure for the vehicle according to claim 1 or claim 2, wherein, in the first skeleton member, a torsional strength of a portion between the second portion and the end portion connection portion is higher than the torsional strength of the second portion.

9. The skeleton structure for the vehicle according to claim 1 or claim 2, wherein one second portion is arranged between the middle connection portion and the end portion connection portion.

10. The skeleton structure for the vehicle according to claim 1 or claim 2, wherein a boundary portion between the first portion and the second portion intersects a rupture line at a time when the first skeleton member is torsionally deformed and ruptured.

FIG.1

FIG.2

FIG.3

Bending moment

Fore end portion
connection portion 51

Middle connection
portion 50

Rear end portion
connection portion 52

Torsional moment

Fore end portion
connection portion 51

Middle connection
portion 50

Rear end portion
connection portion 52

FIG.4A

Variation 1

FIG.4B

Variation 2

FIG.4C

Variation 3

# EP 4 653 296 A1

## INTERNATIONAL SEARCH REPORT

| International application No. |
| --- |
| **PCT/JP2023/021794** |

**A.    CLASSIFICATION OF SUBJECT MATTER**

*B62D 25/20*(2006.01)i; *B62D 25/04*(2006.01)i
FI:    B62D25/20 F; B62D25/04 B

According to International Patent Classification (IPC) or to both national classification and IPC

**B.    FIELDS SEARCHED**

Minimum documentation searched (classification system followed by classification symbols)

B62D25/20; B62D25/04

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| X | JP 2001-71948 A (NISSAN MOTOR CO., LTD.) 21 March 2001 (2001-03-21) paragraphs [0040], [0041], [0062], [0070], fig. 2, 7, 11, 12 | 1-10 |
| A | WO 2011/030463 A1 (TOYOTA JIDOSHA KABUSHIKI KAISHA) 17 March 2011 (2011-03-17) fig. 1 | 1-10 |
| A | Microfilm of the specification and drawings annexed to the request of Japanese Utility Model Application No. 113628/1987 (Laid-open No. 18980/1989) (NISSAN MOTOR CO., LTD.) 31 January 1989 (1989-01-31), fig. 1 | 1-10 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **07 August 2023** | **22 August 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**17**

**INTERNATIONAL SEARCH REPORT**
**Information on patent family members**

International application No.

**PCT/JP2023/021794**

| Patent document<br>cited in search report | Publication date<br>(day/month/year) | Patent family member(s) | Publication date<br>(day/month/year) |
|---|---|---|---|
| JP 2001-71948 A | 21 March 2001 | (Family: none) | |
| WO 2011/030463 A1 | 17 March 2011 | US 2012/0161475 A1<br>fig. 1 | |
| JP 64-18980 U1 | 31 January 1989 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011057146 A